# EUROPEAN PATENT SPECIFICATION

(11) **EP 0 736 412 B1**
(45) Date of publication and mention of the grant of the patent: **18.07.2001**
(21) Application number: 96105489.7
(22) Date of filing: 04.04.1996
(51) Int. Cl.: B60N 2/36

(54) **Multi-position rear seat for a vehicle**
Mehrstellungsrücksitz für ein Fahrzeug
Banquette arrière à positions multiples pour véhicules

(30) Priority: 07.04.1995 IT TO950273
(43) Date of publication of application: 09.10.1996
(73) Proprietor: FIAT AUTO S.p.A., 10135 Torino (IT)
(72) Inventor: Aragno, Franco, 10093 Collegno (IT); Del Grosso, Lucio, 10040 Rivalta (IT)
(74) Representative: Plebani, Rinaldo

(56) References cited:
- EP-A- 0 211 248
- EP-A- 0 673 800
- DE-A- 3 529 735
- DE-U- 9 003 263
- FR-A- 1 013 850
- FR-A- 2 146 564
- FR-A- 2 154 247
- FR-A- 2 351 819
- GB-A- 706 874
- GB-A- 2 095 984
- US-A- 4 106 809

## Description

The invention relates to a multi-position rear seat for a vehicle, particularly a rear seat for a motor vehicle provided with a seat back which has a double movement and can be removed.

Rear seats for vehicles are known which essentially comprise a seat cushion secured at the front to a floor panel of the vehicle by means of first hinges and at the rear by means of locking means that can be released, by means of a catch for example, and a seat back which, with a rear face, defines the limit of a luggage compartment of the vehicle and is secured to the vehicle by means of second hinges, which have a common axis of rotation which is parallel to a lower edge of the seat back, and by means of a known releasable coupling device arranged in proximity to an upper edge of the seat back.

A seat of this kind affords an opportunity of folding both the seat cushion and the seat back forwards so as to obtain an enlargement of the luggage compartment should this be required.

In fact, it is possible to release the rear locking means of the seat cushion and fold it forwards round the first hinges from a first position in which the seat cushion is arranged on the floor panel of the vehicle to a second position in which it is angularly inclined with respect to the horizontal by a pre-determined angle, usually 90°. Similarly, after having released the coupling device, the seat back can be folded downwards round the second hinges from a first dorsal support position, in which it is inclined with respect to the horizontal by a pre-determined angle, appropriately greater than 90°, to a second position in which it is arranged in the same position as was previously occupied by the seat cushion. A relevant example of this kind of seat is disclosed in EP-A-0 211 248 (corresponding to the preamble of claim 1).

Despite being widely used, the seats described have a number of disadvantages. In fact, the enlargement of the luggage compartment that is obtained in the way described above does not permit the load to be kept concealed from the outside if this is desired. Furthermore, it is not possible to remove the seat, or part of it, in the case of particularly bulky loads. A second kind of rear seats for vehicle is known from GB-A-706 874, which discloses a seat back provided with top hinged means which are not detachable, so that the seat back can simply be pivoted without being removed.

The object of the invention is to produce a multi-position rear seat for a vehicle which does not have the disadvantages set out above, in particular being able to assume different configurations according to the user's requirements.

This object is achieved by the invention in that it relates to a multi-position rear seat for a vehicle as claimed in claim 1.

In this way the above-mentioned seat enables the seat cushion and the seat back to be folded in a known manner or enables the seat back to be arranged level with a cover for covering the luggage compartment, or enables the seat back to be removed altogether, obtaining a different type of enlargement of the luggage compartment in each of these ways. Furthermore, if the seat back is arranged level with the cover and the seat cushion is folded in the known manner, the load is concealed from the outside and the passengers are protected by the latter in the event of an accident.

For an improved understanding of the invention, the following describes a preferred embodiment thereof, purely by way of a non-exhaustive example, and with reference to the accompanying drawings in which :
Fig. 1 shows a diagrammatic perspective view of a preferred embodiment of a multi-position rear seat for a vehicle, according to the invention and in a normal position of use;
Fig. 2 is a side view of the seat of Fig. 1, in the normal position of use;
Fig. 3 is a side view of the seat of Fig. 1, in a first operating position;
Fig. 4 is a side view of the seat of Fig. 1, in a second operating position; and
Fig. 5 is a side view of the seat of Fig. 1, in a third operating position which provides for the removal of a part of the seat.

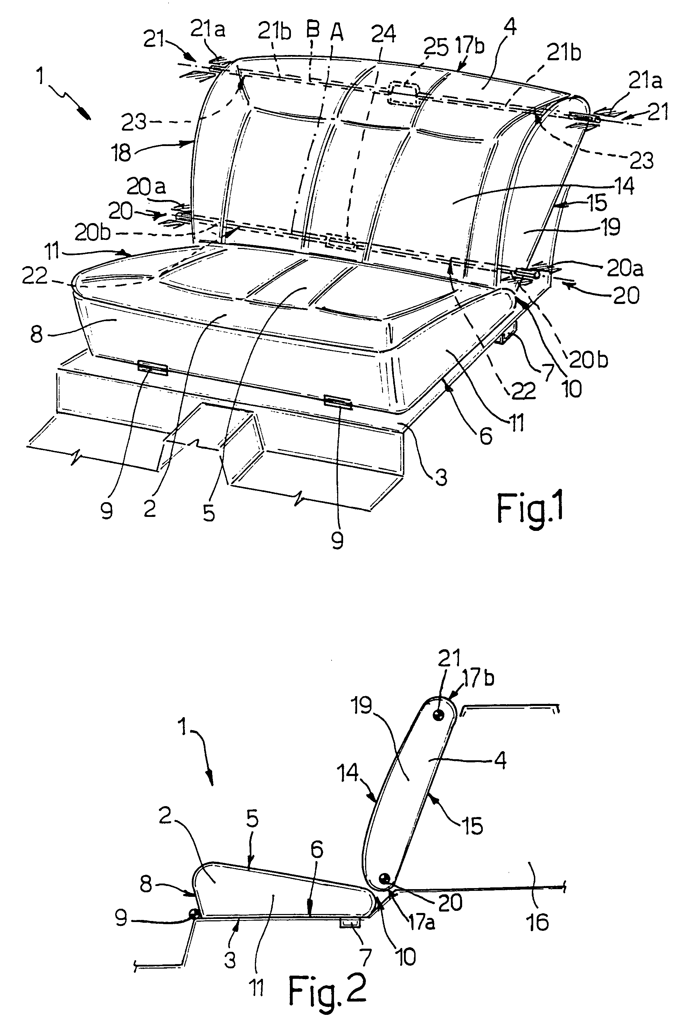

In Figs. 1 to 4, in its entirety 1 indicates a multi-position rear seat for vehicles in general, and for motor vehicles in particular.

With reference to Figs. 1 and 2, the seat 1 is accommodated inside a vehicle which is known and not illustrated for reasons of simplicity, in a normal position of use.

The seat 1 comprises a seat cushion 2 arranged on a floor panel 3 of the vehicle and a seat back 4 which can be moved independently of the seat cushion 2 and is inclined with respect to it by a pre-determined angle such as to permit the correct dorsal support according to the shape and dimensions of the vehicle's interior, appropriately an angle greater than 90°.

The seat cushion 2 is substantially shaped like an upholstered cushion and is defined by an upper face 5, by a lower face 6 secured at the rear to the floor panel 3 by means of a known releasable coupling device 7, by a front edge 8 secured at the bottom to the floor panel 3 by means of a pair of hinges 9, by a rear surface 10 of curved shape and by two lateral sides 11.

The seat back 4 is also shaped like an upholstered cushion and is defined by a front surface 14 of curved shape, by a rear face 15 which is substantially flat and faces towards the interior of a luggage compartment 16 of the vehicle, by two lower and upper edges 17a, 17b which connect the surface 14 to the face 15, and by two lateral sides 18, 19.

The seat 1 also comprises first and second securing means 20, 21 capable of connecting, in proximity to the lower edge 17a and the upper edge 17b respectively, both the lateral sides 18, 19 of the seat back 4 to the vehicle. In the case illustrated, the first securing means 20 comprise a pair of hinges having a common axis A, arranged in proximity and parallel to the edge 17a of the seat back 4; similarly, the second securing means 21 also comprise a pair of hinges having a common axis B, arranged in proximity to the upper edge 17b and parallel to the axis A.

According to the invention the hinges 20, 21 each comprise a first semi-element 20a, 21a which is integral with the vehicle and a second semi-element 20b, 21b which is carried by the seat back 4 and mounted inside the first semi-element 20a, 21a.

The second semi-element 20b, 21b can be released from the first semi-element 20a, 21a, thereby enabling the seat back 4 to be removed from the vehicle in one of the directions represented by the axes A and B or in both of them.

According to the preferred embodiment, each of the second semi-elements 20b, 21b comprises a latch engaging, in a sliding manner, in a hole 22, 23 made through the seat back 4-and having an axis arranged along the direction of the axis A, B of the respective hinge 20, 21. The latches 20b, 21b project from the lateral sides 18, 19 of the seat back 4 so as to be able to engage with the corresponding first semi-elements 20a, 21a to secure the seat back 4. Furthermore, the latches of each pair of hinges, 20b and 21b respectively, are connected together by means of known release means 24, 25 which can be activated independently of each other in order to obtain the sliding of the latches 20b, 21b inside the corresponding holes 22, 23 with consequent release of the latches 20b, 21b from the first semi-elements 20a, 21a.

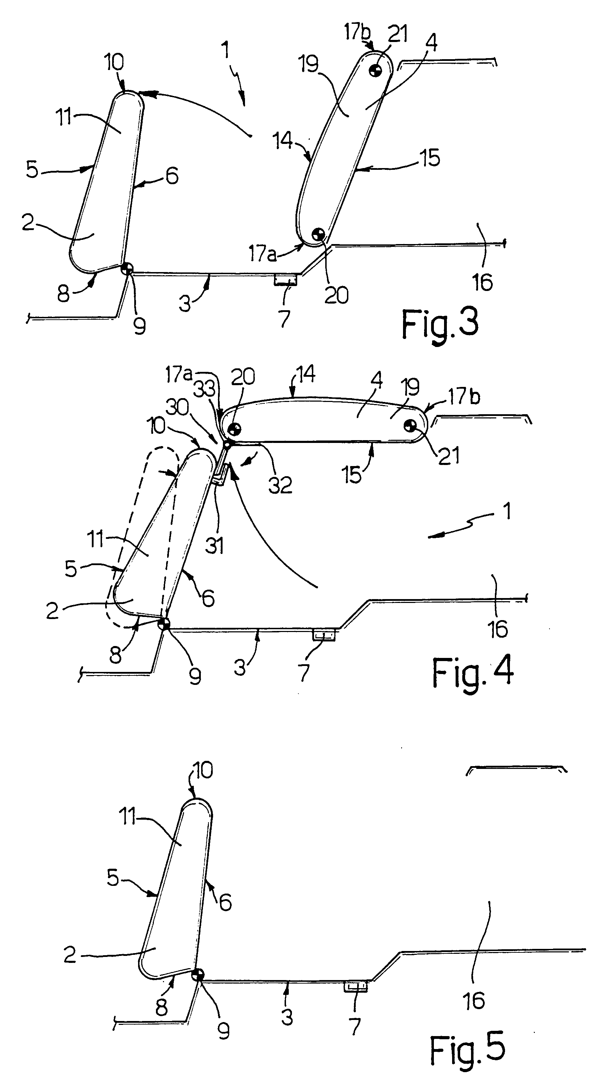

Finally, the seat 1 comprises reciprocal connecting and support means 30 of seat cushion 2 and seat back 4, when these latter are in the operating position shown in Fig. 4, which will be explained in greater detail below.

In use, the seat 1 affords an opportunity of folding the seat cushion 2 forwards as shown in Figs. 3 and 4, permits a double movement for the seat back 4, a first movement of which is shown in Fig. 4, whilst the other is known and is not shown, and permits the removal of the seat back 4 as can be seen in Fig. 5.

With reference to Fig. 3, by releasing the locking means 7 of the seat cushion 2 it is possible to fold the latter upwards round the hinges 9 from a first position, in which the seat cushion 2 is arranged on the floor panel 3, to a second position in which it is angularly inclined with respect to the horizontal by a pre-determined angle, usually 90°.

With the seat cushion 2 in the above-mentioned second position, by releasing the latches 20b from the first semi-elements 20a, the seat back 4 can be folded upwards round the hinges 21 from a first position of dorsal support, in which it is inclined with respect to the horizontal by a pre-determined angle, appropriately greater than 90°, to a second position in which it is arranged parallel to the floor panel 3, as can be clearly seen in Fig. 4.

At this point the seat cushion 2 (Fig. 4) is folded downwards round the hinges 9 into a third position in which it is secured to the seat back 4 by means of the connecting and support means 30; in the case shown, these latter comprise a first L-shaped element 31, totally hidden when the seat cushion 2 is in the above-mentioned first position, and a second element 32 secured by means of a hinge 33 to the face 15 of the seat back 4 and capable of rotating round the hinge 33 from a release position, in which it is arranged in contact with the face 15, to a position of connection to the element 31, and vice-versa.

This thus produces an increase in the capacity of the luggage compartment 16 which is equal to the volume delimited by the floor panel 3, by the seat back 4 in the second position and by the seat cushion 2 in the third position.

According to a known method of moving the seat 1, after having moved the seat cushion 2 into the second position it is also possible to release the latches 21b from the first semi-elements 21a and rotate the seat back 4 downwards round the hinges 20 from the first position of dorsal support to a third position in which it is arranged on the floor panel 3.

Finally, with reference to Fig. 5, by releasing the latches 20b and 21b from both the semi-elements 20a and 21a, it is possible to remove the seat back 4 so as to obtain a further enlargement of the luggage compartment 16.

It is evident that modifications and variants may be made to the seat 1 which do not depart from the protective scope defined by the claims.

In particular, the seat 1 may be divided into two, creating two portions of rear seat arranged side by side and having the same characteristics as the seat 1. In this way the portions of seat obtained may be moved independently of each other, allowing greater flexibility in enlarging the luggage compartment 16.

## Claims

1. Multi-position rear seat (1) for a vehicle comprising a seat cushion (2) which can be secured to a floor panel (3) of the said vehicle at the front by means of first hinged means (9) and at the rear by means of releasable locking means (7), a seat back (4) which can be moved independently of the said seat cushion (2) from a first position in which it forms a pre-determined angle with the said seat cushion (2), and comprising a front dorsal support surface (14) and a rear surface (15) facing towards a luggage compartment (16) of the vehicle, which surfaces are connected together by opposite lateral sides (18, 19), and first and second securing means (20, 21) capable of connecting at least one portion of the said seat back (4) to the vehicle at the bottom and at the top, at least one corresponding portion of the said seat cushion (2) being capable of rotating round the said first hinged means (9) between a first position, in which it is arranged on the said floor panel (3) of the vehicle, and a second position, in which it is folded forwards with respect to the horizontal by a pre-determined angle; the said first and second securing means respectively comprising second hinged means (20), having an axis (A) of rotation adjacent and parallel to a lower edge (17a) of the said portion of the seat back (4), and third hinged means (21), having an axis (B) of rotation adjacent and parallel to an upper edge (17b) of the said seat back (4), each of the said second and third hinged means (20, 21) comprising a first semi-element (20a, 21a) which can be fixed to the said vehicle and a second semi-element (20b, 21b) which is carried by the said portion of the seat back (4);
**characterized in that**:
- each of the said second semi-element (20b, 21b) of both said second and third hinged means (20, 21) can be released from the corresponding first semi-element (20a, 21a);
- the second semi-elements (20b, 21b) of the said second and third hinged means (20, 21) being capable of being released simultaneously from the corresponding first semi-elements (20a, 21a), permitting the removal of the said portion of the seat back (4);
- said third hinged means (21) being capable of allowing the said at least one portion of the said seat back (4) to be folded upwards round the said third hinged means (21), from the said first position to a second position in which the said portion is arranged substantially parallel to the said floor panel (3) of the vehicle, when the said second semi-elements (20b) of the said second hinged means (20) are released from the corresponding first semi-elements (20a).

2. Seat according to Claim 1, characterized in that the said second hinged means comprise at least two lower hinges (20) having the same axis (A) and being aligned with the said lower edge (17a); and in that the said third hinged means also comprise at least two upper hinges (21) having the same axis (B) and being aligned with the said upper edge (17b).

3. Seat according to Claim 2, characterized in that each of the said second semi-elements comprises a latch (20b, 21b) which can slide with respect to the said portion of the seat back (4) and which has an axis arranged along the axis (A, B) of the respective hinge (20, 21); the said latch (20b, 21b) projecting from the said portion of the seat back (4) so as to be able to engage with a corresponding one of the said first semi-elements (20a, 21a) and secure the seat back (4).

4. Seat according to Claim 3, characterized in that it comprises first release means (24) capable of releasing the latches (20b) of the lower hinges (20) from the corresponding first semi-elements (20a), and second release means (25) capable of releasing the latches (21b) of the upper hinges (21) from the respective first semi-elements (21a); the said release means (24, 25) being activatable independently of each other.

5. Seat according to one of the preceding Claims,
characterized in that it comprises reciprocal connecting and support means (30) of the said portion of the seat cushion (2) and of the said portion of the seat back (4), which can be reciprocally connected when the said portion of the seat cushion (2) is in the said second position and the said portion of the seat back (4) is in the said second position.

## Patentansprüche

1. Mehrstellungsrücksitz (1) für ein Fahrzeug, umfassend ein Sitzpolster (2), das vorne mittels erster Gelenkeinrichtungen (9) und hinten mittels lösbarer Feststelleinrichtungen (7) an einem Bodenblech(3) des besagten Fahrzeugs befestigt werden kann, eine Rükkenlehne (4), die unabhängig von dem besagten Sitzpolster (2) von einer ersten Stellung, in der sie einen vorbestimmten Winkel mit dem besagten Sitzpolster (2) bildet, bewegt werden kann, und umfassend eine vordere Rückenstützfläche (14) und eine in Richtung eines Gepäckraums (16) des Fahrzeugs weisende Rückseite (15), welche Flächen durch entgegengesetzte Lateralseiten (18, 19) miteinander verbunden sind, sowie erste und zweiteHalteeinrichtungen(20,21),die mindestens einen Teil der besagten Rückenlehne (4) unten und oben mit dem Fahrzeug verbinden können, wobei sich mindestens ein entsprechender Teil des besagten Sitzpolsters (2) um die besagten ersten Gelenkeinrichtungen (9) herum zwischen einer ersten Stellung, in der er auf dem besagten Bodenblech (3) des Fahrzeugs angeordnet ist, und einer zweiten Stellung drehen läßt, in der er in Bezug zur Horizontalen um einen vorbestimmten Winkel nach vorne geklappt ist; wobei die besagtenerstenbzw.zweitenHalteeinrichtungen umfassen: zweite Gelenkeinrichtungen (20) mit einer Drehachse (A), die benachbart und parallel zu einem unteren Rand (17a) des besagten Teils der Rückenlehne (4) angeordnet ist, und dritte Gelenkeinrichtungen (21) mit einer Drehachse (B), die benachbart und parallel zu einem oberen Rand (17b) der besagten Rückenlehne (4) angeordnet ist, wobei jede von den besagten zweiten und dritten Gelenkeinrichtungen (20, 21) ein erstes Halbelement (20a, 21a), das am besagten Fahrzeug befestigt sein kann, und ein zweites Halbelement (20b, 21b), das durch den besagten Teil der Rückenlehne (4) getragen wird, umfaßt;
dadurch gekennzeichnet, daß:
- jedes besagte zweite Halbelement (20b, 21b) von beiden besagten zweiten und dritten Gelenkeinrichtungen (20, 21) von dem entsprechenden ersten Halbelement (20a, 21a) gelöst werden kann;
- die zweiten Halbelemente (20b, 21b) der besagten zweiten und dritten Gelenkeinrichtungen (20, 21) gleichzeitig von den entsprechenden ersten Halbelementen (20a, 21a) gelöst werden können, wodurch die Entfernung des besagten Teils der Rückenlehne (4) ermöglicht wird;
- wobei es die dritten Gelenkeinrichtungen (21) ermöglichen können, daß sich der besagte mindestens eine Teil der besagten Rückenlehne (4) um die besagten dritten Gelenkeinrichtungen (21) herum von der besagten ersten Stellung in eine zweite Stellung nach oben klappen läßt, in der der besagte Teil im Wesentlichen parallel zum besagten Bodenblech (3) des Fahrzeugs angeordnet ist, wenn die besagten zweiten Halbelemente (20b) der besagten zweiten Gelenkeinrichtungen (20) von den entsprechenden ersten Halbelementen (20a) gelöst sind.

2. Sitz nach Anspruch 1, dadurch gekennzeichnet, daß die besagten zweiten Gelenkeinrichtungen umfassen: mindestens zwei untere Scharniere (20), die dieselbe Achse (A) aufweisen und mit dem besagten unteren Rand (17a) ausgerichtet sind; und dadurch, daß die besagten dritten Gelenkeinrichtungen auch mindestens zwei obere Scharniere (21) umfassen, die dieselbe Achse (B) aufweisen und mit dem besagten oberen Rand (17b) ausgerichtet sind.

3. Sitz nach Anspruch 2, dadurch gekennzeichnet, daß jedes der besagten zweiten Halbelemente eine Arretiereinrichtung (20b, 21b) umfaßt, die sich in Bezug zum besagten Teil der Rückenlehne (4) verschieben lassen kann, und die eine Achse aufweist, die entlang der Achse (A, B) des entsprechenden Scharniers (20, 21) angeordnet ist; wobei die besagte Arretiereinrichtung (20b, 21b) vom besagten Teil der Rückenlehne (4) vorsteht, so daß sie imstande ist, mit einem entsprechenden Element der besagten ersten Halbelemente (20a, 21a) in Eingriff zu treten und die Rückenlehne (4) festzuhalten.

4. Sitz nach Anspruch 3, dadurch gekennzeichnet, daß er umfaßt: erste Freigabeeinrichtungen (24), welche die Arretiereinrichtungen (20b) der unteren Scharniere (20) von den entsprechenden ersten Halbelementen (20a) lösen können, und zweite Freigabeeinrichtungen (25), welche die Arretiereinrichtungen (21b) der oberen Scharniere (21) von den entsprechenden ersten Halbelementen (21a) lösen können; wobei die besagten Freigabeeinrichtungen (24, 25) unabhängig voneinander aktivierbar sind.

5. Sitz nach einem der vorangehenden Ansprüche, dadurch gekennzeichnet, daß er umfaßt:
gegenseitige Verbindungs- und Unterstützungseinrichtungen (30) des besagten Teils des Sitzpolsters (2) und des besagten Teils der Rückenlehne (4), die gegenseitig verbunden werden können, wenn sich der besagte Teil des Sitzpolsters (2) in der besagten zweiten Stellung befindet und sich der besagte Teil der Rückenlehne (4) in der besagten zweiten Stellung befindet.

## Revendications

1. Siège arrière à positions multiples (1) pour un véhicule, comprenant un coussin de siège (2) qui peut être fixé à un panneau de plancher (3) du dit véhicule, à l'avant par un premier dispositif de charnière (9) et à l'arrière par un dispositif de verrouillage libérable (7), un dossier de siège (4) qui peut être déplacé indépendamment du dit coussin de siège (2) à partir d'une première position dans laquelle il forme un angle prédéterminé avec le dit coussin de siège (2), et qui présente une surface avant de support dorsal (14) et une surface arrière (15) tournée vers un compartiment à bagages (16) du véhicule, ces surfaces étant reliées l'une à l'autre par des faces latérales opposées (18, 19), et un premier et un deuxième dispositifs de fixation (20, 21) pouvant connecter au moins une partie du dit dossier de siège (4) au véhicule en bas et en haut, au moins une partie correspondante du dit coussin de siège (2) pouvant tourner autour du dit premier dispositif de charnière (9) entre une première position, dans laquelle elle est placée sur le dit panneau de plancher (3) du véhicule, et une deuxième position dans laquelle elle est rabattue vers l'avant par rapport à l'horizontale suivant un angle prédéterminé ; les dits premier et deuxième dispositifs de fixation comprenant respectivement un deuxième dispositif de charnière (20) ayant un axe de rotation (A) adjacent et parallèle à un bord inférieur (17a) de la dite partie du dossier de siège (4), et un troisième dispositif de charnière (21) ayant un axe de rotation (B) adjacent et parallèle à un bord supérieur (17b) du dit dossier de siège (4), chacun des dits deuxième et troisième dispositifs de charnière (20, 21) comprenant un premier demi-élément (20a, 21a) qui peut être fixé au dit véhicule et un deuxième demi-élément (20b, 21b) qui est porté par la dite partie du dossier de siège (4) ;
caractérisé en ce que
chaque dit deuxième demi-élément (20b, 21b) à la fois des dits deuxième et troisième dispositifs de charnière (20, 21) peut être libéré du premier demi-élément correspondant (20a, 21a) ;
les deuxièmes demi-éléments (20b, 21b) des dits deuxième et troisième dispositifs de charnière pouvant être libérés simultanément des premiers demi-éléments correspondants (20a, 21a), afin de permettre l'enlèvement de la dite partie du dossier de siège (4) ;
le dit troisième dispositif de charnière (21) pouvant permettre le rabattement de la dite au moins une partie du dit dossier de siège (4) vers le haut autour du dit troisième dispositif de charnière (21), de la dite première position à une deuxième position dans laquelle la dite partie est placée sensiblement parallèlement au dit panneau de plancher (3) du véhicule, lorsque les dits deuxièmes demi-éléments (20b) du dit deuxième dispositif de charnière (20) sont libérés des premiers demi-éléments correspondants (20a).

2. Siège selon la revendication 1, caractérisé en ce que le dit deuxième dispositif de charnière comprend au moins deux charnières inférieures (20) ayant le même axe (A) et étant alignées avec le dit bord inférieur (17a) ; et en ce que le dit troisième dispositif de charnière comprend également au moins deux charnières supérieures (21) ayant le même axe (B) et étant alignées avec le dit bord supérieur (17b).

3. Siège selon la revendication 2, caractérisé en ce que chacun des dits deuxièmes demi-éléments comprend un verrou (20b, 21b) qui peut coulisser par rapport à la dite partie du dossier de siège (4) et qui a un axe situé le long de l'axe (A, B) de la charnière respective (20, 21) ; le dit verrou (20b, 21b) faisant saillie par rapport à la dite partie du dossier de siège (14) de façon à pouvoir venir en prise avec un demi-élément correspondant des dits premiers demi-éléments (20a, 21a) et à verrouiller le dossier de siège (4).

4. Siège selon la revendication 3, caractérisé en ce qu'il comprend un premier dispositif de libération (24) pouvant libérer les verrous (20b) des charnières inférieures (20) par rapport aux premiers demi-éléments correspondants (20a), et un deuxième dispositif de libération (25) pouvant libérer les verrous (21 b) des charnières supérieures (21) par rapport aux premiers demi-éléments respectifs (21a) ; les dits dispositifs de libération (24, 25) étant manoeuvrables indépendamment l'un de l'autre.

5. Siège selon une des revendications précédentes,
caractérisé en ce qu'il comprend un dispositif de connexion et de support réciproque (30) de la dite partie du coussin de siège (2) et de la dite partie du dossier de siège (4), qui peuvent être réciproquement connectées lorsque la dite partie du coussin de siège (2) est dans la dite deuxième position et la dite partie du dit dossier de siège (4) est dans la dite deuxième position.
